# EUROPÄISCHE PATENTSCHRIFT

(11) **EP 2 915 922 B1**
(45) Veröffentlichungstag und Bekanntmachung des Hinweises auf die Patenterteilung: **03.02.2016**
(21) Anmeldenummer: 14158170.2
(22) Anmeldetag: 06.03.2014
(51) Int. Cl.: E01F 13/06, G07B 15/04

(54) **Verfahren zum Betreiben einer Fahrzeugschranke**
Method for operating a vehicle barrier
Procédé de fonctionnement d'une barrière de véhicules

(43) Veröffentlichungstag der Anmeldung: 09.09.2015
(73) Patentinhaber: SKIDATA AG, 5083 Grödig/Salzburg (AT)
(72) Erfinder: Harucksteiner, Guido, 5301 Eugendorf (AT); Schlechter, Thomas, 5201 Seekirchen am Wallersee (AT); Surkau, Reinhard, 83278 Traunstein (DE)
(74) Vertreter: Karakatsanis, Georgios

(56) Entgegenhaltungen:
- EP-A1- 2 597 198
- DE-A1- 19 506 193
- DE-U1-202009 017 623
- JP-A- 2000 011 297
- KR-Y1- 200 453 006

## Beschreibung

Die vorliegende Erfindung bezieht sich auf ein Verfahren zum Betreiben einer Fahrzeugschranke gemäß dem Oberbegriff des Patentanspruchs 1. Insbesondere betrifft die Erfindung ein Verfahren zum Betreiben einer Fahrzeugschranke mit einer Schrankensäule, einem Schrankenbaum und einem Antrieb zum Verschwenken des Schrankenbaumes zwischen einer Sperr- und einer Offenposition.

Derartig ausgeführte Fahrzeugschranken werden nach dem Stand der Technik insbesondere als Parkschranken zur Kontrolle der Zu- und Ausfahrt von Parkflächen sowie als Fahrzeugschranken zum Betreiben von Mautstellen eingesetzt.

Ein wesentlicher Parameter für den Betrieb einer derartigen Fahrzeugschranke ist die Fahrzeugerkennung. Hier soll erkannt werden, ob ein Fahrzeug vor einer von der Fahrzeugschranke gesperrten Ein- oder Ausfahrt steht und für den Fall, dass ein Fahrzeug vor der Ein- oder Ausfahrt steht, wie viele Achsen das Fahrzeug aufweist und ob es sich hierbei um ein Motorrad handelt.

Aus dem Stand der Technik ist bekannt, zur Fahrzeugerkennung in der Fahrbahn vor der Ein- oder Ausfahrt verlegte Induktionsschleifen in Verbindung mit einer nachgeschalteten Auswerteelektronik einzusetzen. Die Induktionsschleifen dienen der Erkennung eines Fahrzeugs bei der Ticketein- und -ausgabe und auch der Vermeidung des Verschwenkens des Schrankenbaumes einer Fahrzeugschranke in die Sperrposition, wenn ein Fahrzeug dadurch beschädigt werden kann, d.h. der Vermeidung eines zu frühen Schließens der Fahrzeugschranke.

Die Verwendung von Induktionsschleifen zur Fahrzeugerkennung resultiert jedoch in einer aufwendigen und kostenintensiven Montage in der jeweiligen Fahrbahn, in einer mit Schwierigkeiten behafteten Wartung und in einer begrenzten Lebensdauer, da die Fahrbahn durch das Gewicht der Fahrzeuge gesenkt oder beschädigt werden kann, wodurch die Schleifen beschädigt werden können. Auch kann aufgrund eines Wassereintritts nach einer Fahrbahnbeschädigung eine Korrosion der Schleifen bei defekter oder nicht ausreichender Isolation erfolgen. Ein weiterer Nachteil ist die Tatsache, dass die Verbindung zur Auswerteelektronik eine Verkabelung erfordert, was zu einem weiteren hohen Montage- und Wartungsaufwand führt.

Ein weiterer Parameter für den Betrieb einer Fahrzeugschranke ist nach der Fahrzeugerkennung die Erfassung des Kennzeichens des Fahrzeugs. Dies erfolgt nach dem Stand der Technik über eine Foto- oder Videokamera und anschließender Auswertung der gewonnenen Aufnahmen mittels Schrifterkennung.

Beim Betrieb einer Fahrzeugschranke ist auch die sogenannte Nachfahrerkennung von besonderer Bedeutung, da bei Nachfahren durch eine Schranke auf das vorausfahrende Fahrzeug das einfahrende Fahrzeug nicht registriert wird und für den Fall, dass es sich um ein ausfahrendes Fahrzeug handelt, finanzielle Einbußen die Folge sein können.

Ferner ist es für den Betrieb derartiger Fahrzeugschranken wichtig, Vandalismusversuche rechtzeitig zu erkennen, um entsprechende Gegenmaßnahmen in die Wege zu leiten. Unter Vandalismus wird im Rahmen vorliegender Patentanmeldung sowohl eine unberechtigte Ein- oder Ausfahrt als auch eine unerlaubte Bewegung des Schrankenbaums verstanden, welche unter anderem den Schrankenbaum oder die Fahrzeugschranke beschädigen könnte.

Aus der EP 2597198 A1 der Anmelderin geht ein Verfahren zum Betreiben einer Fahrzeugschranke mit einer Schrankensäule, einem Schrankenbaum und einem Antrieb zum Verschwenken des Schrankenbaumes zwischen einer Sperr- und einer Offenposition hervor, im Rahmen dessen zur Kennzeichenerfassung und zur Erkennung des Status des Schrankenbaums eine Digitalkamera verwendet wird.

Ferner geht aus der JP 2000 011297 A die Verwendung einer Kamera zur Kennzeichenerfassung eines Fahrzeugs vor einer Fahrzeugschranke hervor.

Aus der KR 200 453 006 Y1 ist die Verwendung einer ersten und einer zweiten Kamera zur Fahrzeugerfassung vor einer Fahrzeugschranke hervor, wobei aus der DE 20 2009 017 623 A1 die Verwendung von Infrarotlampen zur Nummernschilderkennung eines vor einer Zugangssperre stehenden Fahrzeugs hervorgeht.

Der vorliegenden Erfindung liegt die Aufgabe zugrunde, ein Verfahren zum Betreiben einer Fahrzeugschranke mit einer Schrankensäule, einem Schrankenbaum und einem Antrieb zum Verschwenken des Schrankenbaumes zwischen einer Sperr- und einer Offenposition anzugeben, durch dessen Durchführung die Anzahl der für den Betrieb benötigten Komponenten reduziert wird.

Diese Aufgabe wird durch die Merkmale des Patentanspruchs 1 gelöst. Weitere erfindungsgemäße Ausgestaltungen und Vorteile gehen aus den Unteransprüchen hervor.

Eine als Digitalkamera ausgeführte erste Kamera ist vorzugsweise in die Schrankensäule integriert, kann aber auch an einer weiteren geeigneten Stelle, auch unabhängig von der Fahrzeugschranke angeordnet sein. Die Anordnung der Kamera ist derart, dass die Funktionen Fahrzeugerkennung, Kennzeichenerfassung, Nachfahrerkennung und Vandalismusüberwachung ausführbar sind.

Die erste Kamera kann als herkömmliche Digitalkamera oder als Kamera zur Nahbereichsphotogrammetrie ausgeführt sein. Im Rahmen einer Weiterbildung der Erfindung kann die Kamera als mit einer Infrarotquelle synchronisierbare Kamera ausgeführt sein, deren Sensor sichtbares Licht und infrarotes Licht detektieren kann, wobei wahlweise Bilder im sichtbaren- und/oder Infrarotbereich, Bilder im sichtbaren Bereich und eine 3D-Rekonstruktion eines erfassten Objektes anhand einer Laufzeitmessung bei Synchronisation mit der Infrarotquelle oder eine 3D- Rekonstruktion eines erfassten Objektes anhand einer Laufzeitmessung bei Synchronisation mit der Infrarotquelle erstellbar sind. Diese Kamera weist die fünf Modi "Aufnahmen im sichtbaren Bereich", "Aufnahmen im Infrarot-Bereich", "Aufnahmen im sichtbaren und Infrarot-Bereich", "Aufnahmen im sichtbaren Bereich und 3D-Rekonstruktion" und "3D-Rekonstruktion" auf und wird im folgenden Multikamera genannt.

Die Funktionen Kennzeichenerfassung, Nachfahrerkennung und Vandalismusüberwachung können für den Fall einer Multikamera durch die im sichtbaren Bereich erstellen Bilder und/oder durch die im Infrarot-Bereich erstellten Bilder durchgeführt werden, wobei durch die parallele Auswertung der Bilder beider Bereiche die Robustheit der Ergebnisse erhöht wird. Beispielsweise kann bei schnee- oder eisbedeckten Kennzeichen die Kennzeichenerfassung im Infrarotbereich bessere Ergebnisse liefern. Der Infrarotbereich kann in vorteilhafter Weise zur Vandalismusüberwachung bei wenig Licht herangezogen werden. Hierbei kann bei der Kennzeichenerfassung, Nachfahrerkennung und Vandalismusüberwachung vom Modus "Aufnahmen im sichtbaren Licht" in den Modus "Aufnahmen im Infrarot-Bereich" oder "Aufnahmen im sichtbaren und Infrarot-Bereich" automatisch umgeschaltet werden, wenn die Umgebungshelligkeit einen Schwellenwert unterschreitet. Zur Fahrzeugerkennung wird vorzugsweise eine 3D- Rekonstruktion durchgeführt, wobei optional eine parallele Auswertung der Bilder im sichtbaren Bereich durchgeführt wird.

Ferner kann durch die ermöglichte 3D- Rekonstruktion der erfassten Objekte eine genaue Fahrzeugerkennung und Klassifizierung des erfassten Objekts erfolgen; beispielsweise kann erkannt werden, ob das erfasste Objekt ein Kraftfahrzeug oder kein Kraftfahrzeug ist, und für den Fall, dass ein Kraftfahrzeug erfasst wird, um welche Art Kraftfahrzeug es sich handelt, so dass eine individuelle Tarifgestaltung für unterschiedliche Fahrzeugkategorien ermöglicht wird. Zudem ist es möglich, die Fahrzeugschranke geschlossen zu halten, wenn das erfasste Objekt kein Kraftfahrzeug ist.

Zudem wird durch die 3D- Rekonstruktion der erfassten Objekte eine unberechtigte Ausfahrt vermieden, falls das bei der Ausfahrt erfasste Fahrzeug nicht zu den Daten passt, welche mit dem Einfahrticket anhand der entsprechenden Erfassung bei der Einfahrt verknüpft sind.

Die 3D- Rekonstruktion kann mit dem Bild im sichtbaren Bereich kombiniert werden, um zusätzliche Informationen zu erhalten, beispielsweise über die Farbe des erfassten Fahrzeugs oder die Umgebungshelligkeit oder um parallel zur 3D-Rekonstrtuktion eine Vandalismusüberwachung, Kennzeichenerfassung oder Nachfahrerkennung durchzuführen.

Bei der 3D- Rekonstruktion eines erfassten Objektes anhand einer Laufzeitmessung bei Synchronisation mit der Infrarotquelle wird die Belichtung des erfassten zu analysierenden Objektes mittels der Infrarotquelle auf vorgegebene Zeitfenster begrenzt. Da es sich um Infrarotlicht handelt, werden in vorteilhafter Weise umstehende Personen nicht beeinträchtigt. Der Sensor der zur Infrarotquelle synchronisierten Kamera bzw. die der Kamera zugeordnete Auswerteelektonik kennt den Sendezeitpunkt des Infrarotlichtes und den Zeitpunkt der Detektion jedes einzelnen Pixels des aufgenommenen Bildes, d.h. die Laufzeit des dem Pixel zugeordneten Infrarotlichtes. Da das detektierte Infrarotlicht ausschließlich von Reflexionen des zu beobachtenden Objektes stammen kann, kann dadurch die Entfernung jedes Teiles des Objektes zur Multikamera errechnet werden. Durch diese Konzeption kann mit einem 2D-Sensor und die Laufzeit des Infrarotlichtes ein 3D-Abbild des Objektes rekonstruiert werden, was anschließend mit einer Datenbank abgeglichen werden kann, um das Objekt automatisch zu erkennen.

Die Multikamera kann gemäß einer Weiterbildung der Erfindung als Digitalkamera mit einem als CCD-oder CMOS-Sensor ausgeführten 2D-Bildsensor, mittels der anhand einer Laufzeitmessung bei Synchronisation mit einer gepulsten Infrarotquelle Entfernungen messbar sind und anhand der gemessenen Entfernungen eine 3D- Rekonstruktion eines erfassten Objektes durchführbar ist, ausgeführt sein. Hierbei weist sie keinen Infrarot-Sperrfilter auf oder sie weist einen Infrarot-Sperrfilter auf, der dynamisch auf die Pixel des Bildsensors bezogen ganz oder teilweise aktivierbar und deaktivierbar ist, wobei für den Fall, dass der Infrarot-Sperrfilter dynamisch auf die Pixel des Bildsensors bezogen ganz oder teilweise aktivierbar und deaktivierbar ist, einzelne Bereiche des Bildsensors, für die der Infrarot-Sperrfilter deaktiviert ist, für die 3D-Rekonstruktion oder für Aufnahmen im Infrarotbereich verwendet werden, wobei die verbleibenden Bereiche des Sensors für Aufnahmen hoher Farbqualität im sichtbaren Lichtspektrum verwendet werden und wobei für den Fall, dass kein Infrarot-Sperrfilter vorhanden ist, einzelne Bereiche des Bildsensors für die 3D-Rekonstruktion oder für Aufnahmen im Infrarotbereich verwendet werden, wobei die verbleibenden Bereiche des Sensors für Aufnahmen im sichtbaren Lichtspektrum verwendet werden.

Die jeweiligen Pixelbereiche des Sensors können hierbei zusammenhängend sein, sodass einzelne Bereiche umfassend jeweils mehrere Pixel für die 3D-Rekonstruktion und/oder für Aufnahmen im Infrarotbereich und einzelne Bereiche umfassend jeweils mehrere Pixel für Aufnahmen im sichtbaren Lichtspektrum genutzt werden. Alternativ dazu kann die Sensorfläche alternierend pixelweise der 3D-Rekonstruktion und/oder den Aufnahmen im Infrarotbereich und Aufnahmen im sichtbaren Lichtspektrum zugeordnet sein

Der Infrarot-Sperrfilter kann für die gesamte Sensorfläche im Zeitmultiplex-Betrieb als Funktion der Zeit aktivierbar und deaktivierbar ist, wobei die Verwendung des Bildsensors für Aufnahmen im Infrarotbereich inklusive 3D-Rekonstruktion und für Aufnahmen im sichtbaren Lichtspektrum zeitlich einteilbar ist.

Ferner kann gemäß einer weiteren Ausgestaltung die Multikamera einen als CMOS-Sensor ausgeführten 2D-Bildsensor aufweisen, wobei mittels der Multikamera anhand einer Laufzeitmessung bei Synchronisation mit einer gepulsten Infrarotquelle Entfernungen messbar sind und anhand der gemessenen Entfernungen eine 3D- Rekonstruktion eines erfassten Objektes durchführbar ist, wobei der Bildsensor um Sonderpixel in Form von pn-Photodioden, Photogate oder Pinned Photodioden erweitert ist und wobei die Entfernungsmessung und 3D-Rekonstruktion mittels der Sonderpixel erfolgt.

Hierbei weisen die Pixel des Sensors, die keine Sonderpixel sind, keinen Infrarot-Sperrfilter auf, wobei einzelne Bereiche des Bildsensors für Aufnahmen im Infrarot-Bereich verwendet werden und die verbleibenden Bereiche des Sensors für Aufnahmen im sichtbaren Lichtspektrum verwendet werden. Alternativ weisen die Pixel des Sensors, die keine Sonderpixel sind, einen Infrarot-Sperrfilter auf, der auf diese Pixel des Bildsensors bezogen ganz oder teilweise dynamisch aktivierbar und deaktivierbar ist, wobei einzelne Bereiche des Bildsensors, für die der Infrarot-Sperrfilter deaktiviert ist, für Aufnahmen im Infrarot-Bereich verwendet werden, wobei die verbleibenden Bereiche des Sensors für Aufnahmen hoher Farbqualität im sichtbaren Lichtspektrum verwendet werden. In vorteilhafter Weise ist die 3D-Auswerteelektronik in den Sensor integriert.

Die beschriebene Multikamera weist die fünf Modi "Aufnahmen im sichtbaren Bereich", "Aufnahmen im Infrarot-Bereich", "Aufnahmen im sichtbaren und Infrarot-Bereich", "Aufnahmen im sichtbaren Bereich und 3D-Rekonstruktion" und "3D-Rekonstruktion" auf. Gemäß einer Weiterbildung der Erfindung kann die gepulste Infrarotquelle in den Bildsensor integriert sein.

Als Infrarot-Sperrfilter können gemäß einer Variante der Erfindung dielektrische Interferenzfilter verwendet werden, wobei in Abhängigkeit des Aufbaus des Filters, insbesondere der Schichtdicke und der Strukturierung des Filters einzelne Wellenlängen unterschiedlich gebrochen werden, wodurch das einfallende Licht aufgespalten wird und in Abhängigkeit der Wellenlänge auf individuelle Pixel fällt. Somit kann bei Verwendung eines dielektrischen Interferenzfilters als Infrarot-Sperrfilter eine unterschiedliche Verteilung des Brechungsindex und somit des einfallenden Lichts in Abhängigkeit der Wellenlänge über die Sensorfläche ermöglicht werden, wodurch für einen Teil der Fläche das Infrarot-Licht gesperrt wird. Im Rahmen einer Weiterbildung können die dielektrischen Interferenzfilter mittels elektromechanischer Aktuatoren bewegbar ausgeführt sein, um dadurch eine dynamische Aktivierung bzw. Deaktivierung des Infrarot-Sperrfilters für einzelne Bereiche zu ermöglichen.

Zusätzlich zu den stationär oder bewegbar ausgeführten Interferenzfiltern können einstellbare Mikrospiegelanordnungen verwendet werden, welche bei Bedarf das jeweils unerwünschte Licht, beispielsweise Infrarotlicht, so reflektieren können, dass es nicht auf vorgegebene Pixel fällt. Auf diese Weise wird in Kombination insbesondere mit stationär ausgeführten dielektrischen Interferenzfiltern ein dynamisch anpassbarer Infrarot-Sperrfilter gebildet.

Gemäß einer weiteren Variante der Erfindung können als Infrarot-Sperrfilter piezoelektrisch steuerbare Interferenzfilter verwendet werden, welche unter Nutzung des Piezoeffekts gezielt Wellenlängenbereiche dämpfen oder verstärken. Durch diese Filter können vorzugsweise größere Bereiche oder die komplette Sensorfläche dynamisch mit einzelnen Wellenlängen belichtet werden, beispielsweise als Funktion der Zeit im Zeitmultiplex-Betrieb.

Ferner können als Infrarot-Sperrfilter elektrisch abstimmbare Flüssigkristallfilter eingesetzt werden, welche eine sehr gezielte und flexible Steuerung der durchzulassenden Wellenlängen ermöglichen.

Die Umschaltung zwischen den fünf Modi "Aufnahmen im sichtbaren Bereich", "Aufnahmen im Infrarot-Bereich", "Aufnahmen im sichtbaren und Infrarotbereich", "Aufnahmen im sichtbaren Bereich und 3D-Rekonstruktion" und "3D-Rekonstruktion" kann wie beschrieben, On-Demand per Software oder auch automatisch entsprechend dem jeweiligen Umgebungslicht erfolgen. So ist es z.B. möglich, vom Modus "Aufnahmen im sichtbaren Licht" in den Modus "Aufnahmen im Infrarot-Bereich" oder "Aufnahmen im sichtbaren und Infrarot-Bereich" automatisch umzuschalten, wenn die Umgebungshelligkeit einen Schwellenwert unterschreitet.

Für den Anwendungsfall Kennzeichenerfassung eines Kraftfahrzeugs kann eine Erhöhung der Gesamtrobustheit erreicht werden, wenn die Erfassung anhand der Auswertung von Aufnahmen im sichtbaren und Infrarot-Bereich erfolgt.

Im Rahmen einer Weiterbildung der Erfindung kann zusätzlich zur ersten Kamera zumindest eine weitere Kamera vorgesehen sein, die als herkömmliche Digitalkamera ausgeführt und in die Schrankensäule integriert oder an einer weiteren geeigneten Stelle angeordnet sein kann. Die Bilder der zumindest einen weiteren Kamera können unabhängig von den Bildern der ersten Kamera ausgewertet werden, wodurch zum Einen die Ausfallsicherheit und die Robustheit erhöht und zum Anderen Fehlerraten bei der Fahrzeugerkennung und Kennzeichenerfassung reduziert werden. Wenn beispielsweise die erste Kamera durch eine zu hohe Lichtintensität geblendet wird, kann ein Gegencheck der Farbe und Form des Fahrzeugs anhand der weiteren Kamera ermöglicht werden.

Die Auswertung der Bilder der ersten Kamera und der weiteren Kamera kann über eine gemeinsame Auswerteelektronik oder über separate Auswerteelektroniken erfolgen, wobei für den Fall einer gemeinsamen Auswerteelektronik die Zuteilung der Ressourcen auf die erste Kamera und die weitere Kamera basierend auf konfigurierbare aufeinanderfolgende Zeitfenster erfolgen kann.

Auch kann mittels der weiteren Kamera zusammen mit der ersten Kamera im Sinne einer Nahbereichsphotogrammetrie ein 3D-Abbild des Fahrzeuges im sichtbaren Bereich des Lichtspektrums erzeugt werden, welches mit einer Datenbank abgeglichen werden kann.

Wenn wie oben beschrieben eine 3D- Rekonstruktion der erfassten Objekte für das nicht-sichtbare Infrarot-Frequenzspektrum durchgeführt wird, kann auch durch die zweite Kamera eine Farbdetektion des erfassten Fahrzeugs ermöglicht werden. Ferner kann die zweite Kamera als Näherungssensor dienen, welcher die erste Kamera aktiviert, wenn sich ein Objekt oder ein Fahrzeug im Ein- oder Ausfahrbereich befindet.

In vorteilhafter Weise kann durch die zweite Kamera die Robustheit einer Nachfahralarmanalyse erhöht werden, wenn ein weiter Blickwinkel auf die durchfahrenden Fahrzeuge ermöglicht wird. Hierbei kann ein von der ersten Kamera detektierter Nachfahrversuch verifiziert werden.

Durch die erfindungsgemäße Konzeption entfallen die Notwendigkeit des Vorsehens von Induktionsschleifen zur Fahrzeugerkennung und somit auch die Notwendigkeit des Vorsehens einer Auswerteelektronik für die Induktionsschleifen. Ferner werden sämtliche für den Betrieb einer Fahrzeugschranke relevanten Funktionen, welche einen Sensor erfordern, von einer Kamera mit entsprechender Auswerteelektronik übernommen, was die Herstellungs-, Wartungs- und Montagekosten erheblich reduziert.

Die Erfindung wird im Folgenden anhand der beigefügten Figuren beispielhaft näher erläutert. Es zeigen:
Fig. 1 ein Flussdiagramm zur Veranschaulichung des erfindungsgemäßen Verfahrens; und
Fig. 2 jeweils eine schematische Seitenansicht und eine Frontansicht einer Fahrzeugschranke mit integrierter Kamera zur Durchführung des erfindungsgemäßen Verfahrens.

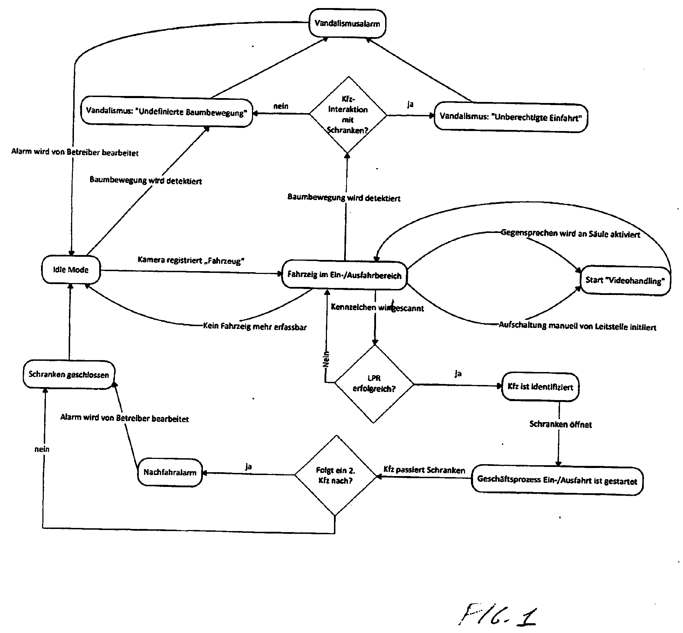

Bezugnehmend auf Figur 1 wartet die Steuerung der Fahrzeugschranke im Leerlaufmodus (idle mode), bei dem sich der Schrankenbaum in der Sperrposition befindet, auf einen Input von der mit der Kamera verbundenen Auswerteelektronik, wobei die Kamera den Ein- oder Ausfahrbereich und den Schrankenbaum überwacht. Wenn anhand der Auswertung der von der Kamera gelieferten Bilder eine Schrankenbaumbewegung detektiert wird und in der Steuerung der Fahrzeugschranke zu diesem Zeitpunkt keine Schrankenbaumbewegung vorgesehen ist, wird eine undefinierte Schrankenbaumbewegung erkannt und ein Vandalismusalarm "undefinierte Schrankenbaumbewegung" ausgelöst, wobei die Fahrzeugschranke anschließend in den Leerlaufmodus übergeht. Für den Fall, dass die Kamera als Multikamera ausgeführt ist, kann die Überwachung im sichtbaren und/oder im Infrarotbereich durchgeführt werden.

Wenn sich im Leerlaufmodus der Fahrzeugschranke ein Fahrzeug im Ein- oder Ausfahrbereich befindet, wird dieses von der Auswerteelektronik anhand der von der Kamera gelieferten Bilder erkannt, wobei nach der Fahrzeugerkennung anhand der von der Kamera gelieferten Bilder eine Kennzeichenerfassung (LPR, License Plate Recognition) durchgeführt wird. Bei erfolgreicher Kennzeichenerfassung wird das Fahrzeug identifiziert und die Daten in einer Datenbank abgelegt oder mit den Daten einer Datenbank abgeglichen und der Schrankenbaum der Fahrzeugschranke wird je nach Anwendungsfall zum Ein- oder zum Ausfahren im Öffnungssinne betätigt, so dass das Fahrzeug passieren kann. Für den Fall, dass die Kamera als Multikamera ausgeführt ist, kann die Fahrzeugerkennung im sichtbaren und/oder im Infrarotbereich durchgeführt werden, wobei mittels der Multikamera eine 3D-Rekonstruktion des erfassten Objektes durchführbar ist; zudem kann die Kennzeichenerfassung im sichtbaren und/oder im Infrarotbereich durchgeführt werden, wobei die Kennzeichenerfassung im sichtbaren und im Infrarotbereich die Robustheit der Ergebnisse erhöht.

Hierbei wird für den Fall eines Ausfahrens die Schranke im Öffnungssinne betätigt, wenn die Parkgebühr entrichtet worden ist, was beispielsweise der Fall sein kann, wenn ein Konto eines Dauerparkers belastet worden ist. Im Rahmen einer Weiterbildung der Erfindung wird für den Fall des Ausfahrens nach erfolgreicher Kennzeichenerfassung ein Bezahlprozess gestartet, um dem Fahrer das Entrichten der Parkgebühr über eine entsprechende Vorrichtung der Schrankensäule, beispielsweise über eine Vorrichtung zur Übermittlung von Kreditkartendaten zu ermöglichen. Für den Fall eines Einfahrens kann vorgesehen sein, dass vor dem Betätigen des Schrankenbaums im Öffnungssinne von einer Vorrichtung, die in die Schrankensäule integriert sein kann, ein Ticket ausgegeben wird.

Wenn der Fahrzeugschranke je nach Anwendungsfall zum Ein- oder zum Ausfahren im Öffnungssinne betätigt wird, wird eine Nachfahrerkennung anhand der Auswertung der von der Kamera gelieferten Bilder aktiviert, wobei wenn kein dem identifizierten Fahrzeug nachfahrendes Fahrzeug erkannt wird, der Schrankenbaum im Schließsinne betätigt wird und die Fahrzeugschranke in den Leerlaufmodus übergeht. Wenn ein Nachfahrversuch erkannt wird, wird ein Nachfahralarm ausgelöst und wenn auch das nachfahrende Fahrzeug passiert ist, wird der Schrankenbaum im Schließsinne betätigt. Anschließend geht die Fahrzeugschranke in den Leerlaufmodus über. Die Nachfahrerkennung kann im sichtbaren und/oder im Infrarotbereich durchgeführt werden, wobei die Kennzeichenerfassung im sichtbaren und im Infrarotbereich die Robustheit der Ergebnisse erhöht.

Wenn nach der Fahrzeugerkennung innerhalb eines vorgegebenen Zeitraums kein Fahrzeug mehr erfasst werden kann, bevor die Kennzeichenerfassung durchgeführt oder der Schrankenbaum im Öffnungssinne betätigt wird, geht die Fahrzeugschranke ebenfalls in den Leerlaufmodus über.

Für den Fall, dass ein Fahrzeug im Ein- oder Ausfahrbereich erkannt wird und eine Bewegung des Schrankenbaums mittels der Auswertung der von der Kamera gelieferten Bilder ohne ein entsprechendes Signal der Steuerung der Fahrzeugschranke detektiert wird, wird für den Fall, dass mittels der Kamera eine Interaktion zwischen Fahrzeug und Schrankenbaum registriert wird, ein Vandalismusalarm je nach Anwendungsfall für eine unberechtigte Ein- oder Ausfahrt ausgelöst, wobei für den Fall, dass keine Interaktion zwischen Fahrzeug und Schrankenbaum registriert wird, eine undefinierte Schrankenbaumbewegung erkannt und ein Vandalismusalarm "undefinierte Schrankenbaumbewegung" ausgelöst wird. Anschließend geht die Fahrschranke in den Leerlaufmodus über.

Wenn nach der Erkennung eines Fahrzeugs im Ein- oder Ausfahrbereich keine erfolgreiche Kennzeichenerfassung durchgeführt werden kann, wird eine Gegensprechanlage an der Schrankensäule automatisch oder von einer Leistelle manuell aktiviert, wobei die Bilder der Kamera optional an die Leistelle übertragen werden.

Eine Übertragung der Bilder der Kamera an eine Leistelle kann jederzeit unabhängig vom Betriebsmodus der Fahrschranke aktiviert werden.

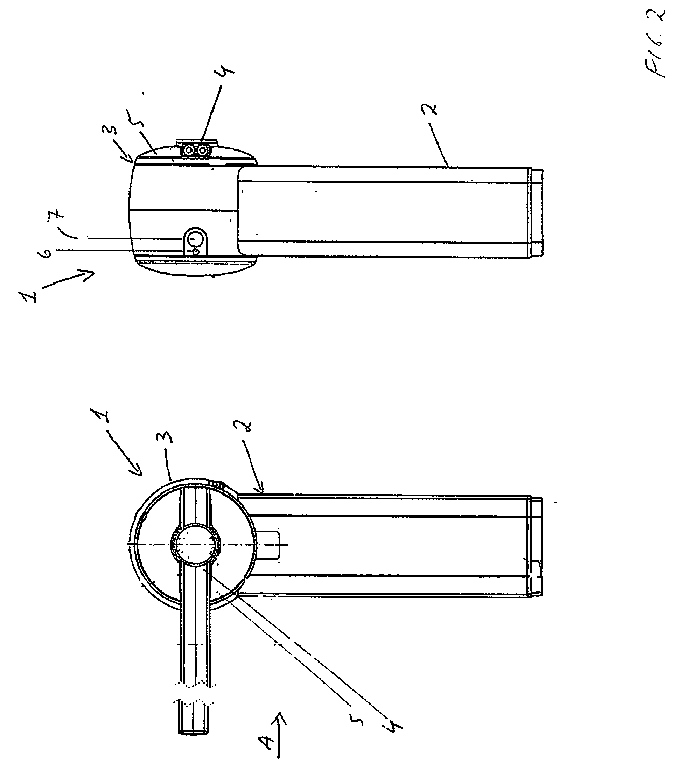

In Figur 2 ist beispielhaft eine Fahrzeugschranke 1 dargestellt, welche eine Schrankensäule 2 mit einem Schrankenkopf 3, einen Schrankenbaum 4 und einen in der Schrankensäule 2 angeordneten Antrieb zum Verschwenken des Schrankenbaumes 4 zwischen der Sperr- und der Offenposition umfasst. Der dargestellte Schrankenbaum 4 ist an dem der Schrankensäule 2 zugewandten Ende mit einer mit dem Antrieb wirkverbundenen Schrankenkopfscheibe 5 drehfest verbunden und als einteiliger Schrankenbaum ausgeführt, kann aber auch als Knickbaum mit einem verschwenkbaren Gelenk ausgeführt sein. Für den Fall von Rechtsverkehr entspricht die im linken Teil der Figur 2 dargestellte Seite der Rückseite, d.h. der den ankommenden Fahrzeugen abgewandten Seite der Fahrzeugschranke 1.

Im rechten Teil der Figur 2 ist eine Seitenansicht der im linken Teil der Figur 2 dargestellten Fahrzeugschranke 1 in Richtung des Pfeils A; bei dem gezeigten Beispiel weist die Schrankensäule 2 der Fahrzeugschranke 1 einen Helligkeitssensor 6 zur Einstellung der Beleuchtung des Schrankenbaums 4, für den Fall, dass der Schrankenbaum 4 als beleuchtbarer Schrankenbaum ausgeführt ist und/oder zur Einstellung der Leuchtstärke einer Spurampel für den Fall, dass die Fahrzeugschranke 1 mit einer leuchtenden, in der Helligkeit justierbaren Spurampel versehen ist.

Wie dem rechten Teil der Figur 2 zu entnehmen ist, weist die Fahrzeugschranke 1 eine in die Schrankensäule 2 integrierte Kamera 7 zur Fahrzeugerkennung, zur Kennzeichenerfassung, zur Nachfahrerkennung und zur Vandalismusüberwachung auf, deren Bilder von einer mit der Steuerung der Fahrzeugschranke 1 verbundenen Auswerteelektronik ausgewertet werden. Die Kamera 7 kann wie bereits erläutert als herkömmliche Digitalkamera, als Kamera zur Nahbereichsphotogrammetrie oder als Multikamera im Sinne der Erfindung ausgeführt sein.

## Patentansprüche

1. Verfahren zum Betreiben einer Fahrzeugschranke (1) mit einer Schrankensäule (2), einem Schrankenbaum (4) und einem Antrieb zum Verschwenken des Schrankenbaumes (4) zwischen einer Sperr- und einer Offenposition, wobei zur Fahrzeugerkennung, zur Kennzeichenerfassung und zur Vandalismusüberwachung eine erste als Digitalkamera ausgeführte Kamera (7) verwendet wird, deren Bilder von einer mit einer Steuerung der Fahrzeugschranke (1) verbundenen Auswerteelektronik ausgewertet werden, **dadurch gekennzeichnet, dass** die Fahrzeugschranke (1) einen Leerlaufmodus aufweist, bei dem sich der Schrankenbaum (4) in der Sperrposition befindet und die Steuerung der Fahrzeugschranke (1) auf einen Input von der mit der Kamera (7) verbundenen Auswerteelektronik wartet, wobei im Leerlaufmodus die Kamera (7) den Ein- oder Ausfahrbereich und den Schrankenbaum (4) überwacht, wobei wenn anhand der Auswertung der von der Kamera (7) gelieferten Bilder eine Schrankenbaumbewegung detektiert wird und in der Steuerung der Fahrzeugschranke (1) zu diesem Zeitpunkt keine Schrankenbaumbewegung vorgesehen ist, eine undefinierte Schrankenbaumbewegung erkannt und ein Vandalismusalarm "undefinierte Schrankenbaumbewegung" ausgelöst wird, wobei (1) die Fahrzeugschranke anschließend in den Leerlaufmodus übergeht;
wobei, wenn sich im Leerlaufmodus der Fahrzeugschranke (1) ein Fahrzeug im Ein- oder Ausfahrbereich befindet, dieses von der Auswerteelektronik anhand der von der Kamera (7) gelieferten Bilder erkannt wird und anschließend anhand der von der Kamera (7) gelieferten Bilder eine Kennzeichenerfassung des Fahrzeugs durchgeführt wird, wobei bei erfolgreicher Kennzeichenerfassung das Fahrzeug identifiziert und die Daten in einer Datenbank abgelegt oder mit den Daten einer Datenbank abgeglichen werden und der Schrankenbaum (4) der Fahrzeugschranke (1) je nach Anwendungsfall zum Ein- oder zum Ausfahren im Öffnungssinne betätigt wird, so dass das Fahrzeug passieren kann, wobei für den Fall des Ausfahrens die Schranke im Öffnungssinne betätigt wird, wenn die Parkgebühr entrichtet worden ist;
wobei, wenn der Fahrzeugschranke je nach Anwendungsfall zum Ein- oder zum Ausfahren im Öffnungssinne betätigt wird, eine Nachfahrerkennung anhand der Auswertung der von der Kamera gelieferten Bilder aktiviert wird, wobei wenn kein dem identifizierten Fahrzeug nachfahrendes Fahrzeug erkannt wird, der Schrankenbaum im Schließsinne betätigt wird und die Fahrzeugschranke (1) in den Leerlaufmodus übergeht.

2. Verfahren zum Betreiben einer Fahrzeugschranke (1) nach Anspruch 1, **dadurch gekennzeichnet, dass** für den Fall eines Ausfahrens nach erfolgreicher Kennzeichenerfassung ein Bezahlprozess gestartet wird, um dem Fahrer des Fahrzeugs das Entrichten der Parkgebühr über eine entsprechende Vorrichtung der Schrankensäule (2) zu ermöglichen.

3. Verfahren zum Betreiben einer Fahrzeugschranke (1) nach Anspruch 1 oder 2, **dadurch gekennzeichnet, dass** für den Fall eines Einfahrens vor dem Betätigen des Schrankenbaums (4) im Öffnungssinne ein Ticket ausgegeben wird.

4. Verfahren zum Betreiben einer Fahrzeugschranke (1) nach Anspruch 1, 2 oder 3, **dadurch gekennzeichnet, dass**, wenn nach der Fahrzeugerkennung innerhalb eines vorgegebenen Zeitraums kein Fahrzeug mehr erfasst werden kann, bevor die Kennzeichenerfassung durchgeführt oder der Schrankenbaum (4) im Öffnungssinne betätigt wird, die Fahrzeugschranke (1) in den Leerlaufmodus übergeht.

5. Verfahren zum Betreiben einer Fahrzeugschranke (1) nach Anspruch 1, 2, 3 oder 4, **dadurch gekennzeichnet, dass**, für den Fall, dass ein Fahrzeug im Ein- oder Ausfahrbereich erkannt wird und eine Bewegung des Schrankenbaums (4) mittels der Auswertung der von der Kamera (7) gelieferten Bilder ohne ein entsprechendes Signal der Steuerung der Fahrzeugschranke (1) detektiert wird, ein Vandalismusalarm für eine unberechtigte Ein- oder Ausfahrt ausgelöst wird, wenn mittels der Kamera (7) eine Interaktion zwischen Fahrzeug und Schrankenbaum (4) registriert wird, wobei wenn keine Interaktion zwischen Fahrzeug und Schrankenbaum (4) registriert wird, ein Vandalismusalarm "undefinierte Schrankenbaumbewegung" ausgelöst wird.

6. Verfahren zum Betreiben einer Fahrzeugschranke (1) nach Anspruch 1, 2, 3, 4 oder 5, **dadurch gekennzeichnet, dass**, wenn nach der Erkennung eines Fahrzeugs im Ein- oder Ausfahrbereich keine erfolgreiche Kennzeichenerfassung durchgeführt werden kann, eine Gegensprechanlage an der Schrankensäule (2) automatisch oder von einer Leistelle manuell aktiviert wird, wobei die Bilder der Kamera (7) optional an die Leistelle übertragen werden.

7. Verfahren zum Betreiben einer Fahrzeugschranke (1) nach einem der vorangehenden Ansprüche, **dadurch gekennzeichnet, dass** zumindest eine weitere Kamera vorgesehen ist, die in die Schrankensäule (2) integriert oder an einer weiteren geeigneten Stelle angeordnet ist, deren Bilder unabhängig von den Bildern der ersten Kamera (7) ausgewertet werden, wodurch zum Einen die Ausfallsicherheit erhöht wird und zum Anderen Fehlerraten bei der Fahrzeugerkennung und Kennzeichenerfassung reduziert werden.

8. Verfahren zum Betreiben einer Fahrzeugschranke (1) nach einem der vorangehenden Ansprüche, **dadurch gekennzeichnet, dass** die erste Kamera (7) als herkömmliche Digitalkamera, als Kamera zur Nahbereichsphotogrammetrie oder als mit einer Infrarotquelle synchronisierbare Kamera ausgeführt ist, deren Sensor sichtbares Licht und infrarotes Licht detektieren kann, wobei mittels der mit einer Infrarotquelle synchronisierbaren Kamera wahlweise Bilder im sichtbaren- und/oder Infrarotbereich, Bilder im sichtbaren Bereich und eine 3D-Rekonstruktion eines erfassten Objektes anhand einer Laufzeitmessung bei Synchronisation mit der Infrarotquelle oder eine 3D- Rekonstruktion eines erfassten Objektes anhand einer Laufzeitmessung bei Synchronisation mit der Infrarotquelle erstellbar sind.

9. Verfahren zum Betreiben einer Fahrzeugschranke (1) nach Anspruch 8, **dadurch gekennzeichnet, dass** für den Fall einer mit einer Infrarotquelle synchronisierbaren Kamera die Funktionen Kennzeichenerfassung, Nachfahrerkennung und Vandalismusüberwachung anhand der im sichtbaren Bereich erstellen Bilder und/oder anhand der im Infrarot-Bereich erstellten Bilder durchgeführt werden, wobei durch die parallele Auswertung der Bilder beider Bereiche die Robustheit der Ergebnisse erhöht wird und wobei zur Fahrzeugerkennung eine 3D- Rekonstruktion durchgeführt wird, wobei optional eine parallele Auswertung der Bilder im sichtbaren Bereich durchgeführt wird.

10. Verfahren zum Betreiben einer Fahrzeugschranke (1) nach Anspruch 9, **dadurch gekennzeichnet, dass** bei der Kennzeichenerfassung, Nachfahrerkennung und Vandalismusüberwachung vom Modus "Aufnahmen im sichtbaren Licht" in den Modus "Aufnahmen im Infrarot-Bereich" oder "Aufnahmen im sichtbaren und Infrarot-Bereich" automatisch umgeschaltet wird, wenn die Umgebungshelligkeit einen Schwellenwert unterschreitet.

## Claims

1. A method for the operation of a vehicle barrier (1) with a barrier column (2), a barrier boom (4) and a drive for pivoting the barrier boom (4) between a blocking position and an open position, wherein
for purposes of vehicle detection, for purposes of licence plate recognition, and for purposes of monitoring vandalism, a first camera (7) embodied as a digital camera is used, the images from which are evaluated by evaluation electronics connected with a controller of the vehicle barrier (1),
**characterised in that**,
the vehicle barrier (1) has an idle mode, in which the barrier boom (4) is located in the blocking position, and the controller of the vehicle barrier (1) is waiting for an input from the evaluation electronics connected with the camera (7), wherein
in the idle mode the camera (7) monitors the vehicle entry or exit region and the barrier boom (4), wherein
if, on the basis of the evaluation of the images supplied by the camera (7) a movement of the barrier boom is detected, and in the controller of the vehicle barrier (1) no movement of the barrier boom is intended at this point in time, an undefined barrier boom movement is detected, and a vandalism alarm "undefined barrier boom movement" is triggered, wherein the vehicle barrier (1) then transfers into the idle mode, wherein
if, in the idle mode of the vehicle barrier (1), a vehicle is located in the vehicle entry or exit region, this is detected by the evaluation electronics on the basis of the images supplied by the camera (7), and a licence plate recognition of the vehicle is then executed on the basis of the images supplied by the camera (7), wherein
in the event of a successful licence plate recognition the vehicle is identified and the data are stored in a data base, or compared with the data of a database, and the barrier boom (4) of the vehicle barrier (1), depending upon whether the application is for the purpose of vehicle entry or exit, is actuated in the opening sense so that the vehicle can pass through, wherein
for the vehicle exit case the barrier is actuated in the opening sense if the parking fee has been paid, wherein
if the vehicle barrier, depending upon whether the application is for the purpose of vehicle entry or exit, is actuated in the opening sense, detection of any following vehicle is activated on the basis of the evaluation of the images supplied by the camera, wherein
if no vehicle is detected following the identified vehicle, the barrier boom is actuated in the closing sense and the vehicle barrier (1) transfers into the idle mode.

2. A method for the operation of a vehicle barrier (1) in accordance with claim 1,
**characterised in that**,
for the case in which a vehicle is exiting after a successful licence plate recognition, a payment process is started so as to enable the driver of the vehicle to pay the parking fee via an appropriate device on the barrier column (2).

3. A method for the operation of a vehicle barrier (1) in accordance with claim 1 or 2,
**characterised in that**,
for the case in which a vehicle is entering a ticket is outputted before the actuation of the barrier boom (4) in the opening sense.

4. A method for the operation of a vehicle barrier (1) in accordance with claim 1, 2, or 3,
**characterised in that**,
if, after the vehicle detection no further vehicle can be registered within a prescribed period of time, the vehicle barrier (1) transfers into the idle mode before the licence plate recognition is executed, or the barrier boom (4) is actuated in the opening sense.

5. A method for the operation of a vehicle barrier (1) in accordance with claim 1, 2, 3, or 4,
**characterised in that**,
for the case in which a vehicle is detected in the vehicle entry or exit region, and a movement of the barrier boom (4) is detected by means of the evaluation of the images supplied by the camera (7), without an appropriate signal from the controller of the vehicle barrier (1), a vandalism alarm is triggered for an unauthorised vehicle entry or exit, if an interaction between vehicle and barrier boom (4) is registered by means of the camera (7), wherein
if no interaction between vehicle and barrier boom (4) is registered, a vandalism alarm "undefined barrier boom movement" is triggered.

6. A method for the operation of a vehicle barrier (1) in accordance with claim 1, 2, 3, 4, or 5,
**characterised in that**,
if, after the detection of a vehicle in the vehicle entry or exit region, no successful licence plate recognition can be executed, an intercom system on the barrier column (2) is activated automatically, or manually by a control centre, wherein
the images from the camera (7) are optionally transmitted to the control centre.

7. A method for the operation of a vehicle barrier (1) in accordance with one of the preceding claims,
**characterised in that**,
at least one other camera is provided, which is integrated into the barrier column (2), or is arranged at another suitable location, whose images are evaluated independently of the images from the first camera (7), as a result of which on the one hand the reliability is increased, and on the other hand error rates in vehicle detection and licence plate recognition are reduced.

8. A method for the operation of a vehicle barrier (1) in accordance with one of the preceding claims, **characterised in that**,
the first camera (7) is embodied as a conventional digital camera, as a camera for purposes of close range photogrammetry, or as a camera that can be synchronised with an infrared source, whose sensor can detect visible light and infrared light, wherein
by means of the camera that can be synchronised with an infrared source, images in the visible and/or infrared spectrum, images in the visible spectrum and a 3D-reconstruction of a registered object on the basis of a travel time measurement synchronised with the infrared source, or a 3D-reconstruction of a registered object on the basis of a travel time measurement synchronised with the infrared source, can optionally be generated.

9. A method for the operation of a vehicle barrier (1) in accordance with claim 8,
**characterised in that**,
for the case of a camera that can be synchronised with an infrared source the functions of licence plate recognition, detection of a following vehicle and monitoring of vandalism are executed on the basis of the images generated in the visible spectrum, and/or on the basis of the images generated in the infrared spectrum, wherein
by the parallel evaluation of the images from both spectra the robustness of the results is increased, and wherein
for purposes of vehicle detection a 3D-reconstruction is executed, wherein
a parallel evaluation of the images in the visible spectrum is optionally executed.

10. A method for the operation of a vehicle barrier (1) in accordance with claim 9,
**characterised in that**,
during the licence plate recognition, detection of following vehicles, and monitoring of vandalism there is an automatic switch from the mode "images recorded in the visible spectrum," into the mode "images recorded in the infrared spectrum", or "images recorded in the visible and infrared spectra", if the ambient light level falls below a threshold value.

## Revendications

1. Procédé d'utilisation d'une barrière à véhicules (1), comportant une colonne de barrière (2), un arbre de barrière (4) et un organe de commande pour faire pivoter l'arbre de barrière (4) entre une position barrée et une position ouverte, dans lequel on utilise, pour détecter le véhicule, pour enregistrer l'immatriculation et pour surveiller le vandalisme, une première caméra (7) se présentant sous forme d'une caméra numérique dont les images sont exploitées par un système électronique d'exploitation relié à une commande de la barrière à véhicules (1), **caractérisé en ce que** la barrière à véhicules (1) présente un mode marche à vide dans lequel l'arbre de barrière (4) se trouve dans la position de barrage et la commande de la barrière à véhicule (1) attend une entrée du système électronique d'exploitation relié à la caméra (7), sachant que, en mode marche à vide, la caméra (7) surveille la zone d'entrée ou de sortie et l'arbre de barrière (4), sachant que, lorsque, à partir de l'exploitation des images fournies par la caméra (7), un mouvement de l'arbre de barrière est détecté et qu'il n'est pas prévu à ce moment-là de mouvement de l'arbre de barrière dans la commande de la barrière à véhicules (1), un mouvement indéfini de l'arbre de barrière est détecté et une alarme de vandalisme « mouvement indéfini de l'arbre de barrière » est déclenchée, la barrière à véhicules (1) passant ensuite en mode marche à vide ;
Sachant que si, en mode marche à vide de la barrière à véhicules (1) un véhicule se trouve dans la zone d'entrée ou de sortie, celui-ci est détecté par le système électronique d'exploitation à partir des images fournies par la caméra (7) et qu'ensuite, à partir des images fournies par la caméra (7), un enregistrement d'immatriculation du véhicule est réalisé, sachant que, en cas d'enregistrement satisfaisant de l'immatriculation, le véhicule est identifié et les données sont enregistrées dans une banque de données ou comparées avec les données d'une banque de données et que l'arbre à barrière (4) de la barrière à véhicules (1) est actionné en fonction du cas d'application pour entrer ou sortir dans le sens d'ouverture pour que le véhicule puisse passer, sachant que, pour le cas de la sortie, la barrière est actionnée dans le sens d'ouverture une fois que les frais de parking ont été payés ;
sachant que, si la barrière à véhicules est actionnée pour entrer ou sortir dans le sens d'ouverture en fonction du cas d'application, une détection de véhicule suivant est activée à partir de l'exploitation des images fournies par la caméra, sachant que, si aucun véhicule suivant le véhicule identifié n'est détecté, l'arbre de barrière est actionné dans le sens de la fermeture et la barrière à véhicules (1) passe en mode marche à vide.

2. Procédé d'utilisation d'une barrière à véhicules (1) selon la revendication 1, **caractérisé en ce que**, pour le cas d'une sortie après un enregistrement satisfaisant de l'immatriculation, un processus de paiement est lancé afin de permettre au conducteur du véhicule de payer les frais de parking au moyen d'un dispositif correspondant de la colonne de barrière (2).

3. Procédé d'utilisation d'une barrière à véhicules (1) selon la revendication 1 ou 2, **caractérisé en ce que**, pour le cas d'une entrée avant l'actionnement de l'arbre de barrière (4) dans le sens d'ouverture, un ticket est édité.

4. Procédé d'utilisation d'une barrière à véhicules (1) selon la revendication 1, 2 ou 3, **caractérisé en ce que** si, après la détection du véhicule pendant une période prédéterminée, plus aucun véhicule ne peut être enregistré avant que l'enregistrement de l'immatriculation soit réalisé ou que l'arbre de barrière (4) soit actionné dans le sens d'ouverture, la barrière à véhicules (1) passe en mode marche à vide.

5. Procédé d'utilisation d'une barrière à véhicules (1) selon la revendication 1, 2, 3 ou 4, **caractérisé en ce que**, pour le cas où un véhicule est détecté dans la zone d'entrée ou de sortie et où un mouvement de l'arbre de barrière (4) est détecté au moyen de l'exploitation des images fournies par la caméra (7) sans signal correspondant de la commande de la barrière à véhicules (1), une alarme de vandalisme est déclenchée pour une entrée ou une sortie non autorisée si, au moyen de la caméra (7), une interaction entre le véhicule et l'arbre de barrière (4) est enregistrée, sachant que, si aucune interaction entre le véhicule et l'arbre de barrière (4) n'est enregistrée, une alarme de vandalisme « mouvement indéfini de l'arbre de barrière » est déclenchée.

6. Procédé d'utilisation d'une barrière à véhicules (1) selon la revendication 1, 2, 3, 4 ou 5, **caractérisé en ce que**, après la détection d'un véhicule dans la zone d'entrée ou de sortie, aucun l'enregistrement satisfaisant de l'immatriculation ne peut être réalisé, un système d'interphone est activé automatiquement ou manuellement par un poste de commande au niveau de la colonne de barrière (2), les images de la caméra (7) étant optionnellement transmises au poste de commande.

7. Procédé d'utilisation d'une barrière à véhicules (1) selon l'une quelconque des revendications précédentes, **caractérisé en ce qu'**il est prévu au moins une autre caméra qui est intégrée dans la colonne de barrière (2) ou est disposée à un autre endroit approprié et dont les images sont exploitées indépendamment des images de la première caméra (7), ce qui d'une part accroît la sécurité contre les accidents et d'autre part réduit les taux d'erreur lors de la détection des véhicules et de l'enregistrement des immatriculations.

8. Procédé d'utilisation d'une barrière à véhicules (1) selon l'une quelconque des revendications précédentes, **caractérisé en ce que** la première caméra (7) se présente sous forme d'une caméra numérique traditionnelle, d'une caméra de photogrammétrie rapprochée ou d'une caméra synchronisable avec une source d'infrarouges et dont le capteur peut détecter la lumière visible et la lumière infrarouge, sachant que, au moyen de la caméra synchronisable avec une source d'infrarouges, on peut créer au choix des images dans la plage visible et/ou infrarouge, des images dans la plage visible et une reconstruction 3D d'un objet détecté à partir d'une mesure de durée avec synchronisation avec la source d'infrarouges ou une reconstruction 3D d'un objet détecté à partir d'une mesure de durée avec synchronisation avec la source d'infrarouges.

9. Procédé d'utilisation d'une barrière à véhicules (1) selon la revendication 8, **caractérisé en ce que**, pour le cas d'une caméra synchronisable avec une source d'infrarouges, les fonctions d'enregistrement d'immatriculation, de détection de véhicule suivant et de contrôle de vandalisme sont réalisées à partir des images établies dans la plage visible et/ou à partir des images établies dans la plage infrarouge, sachant que, grâce à l'exploitation parallèle des images des deux plages, la validité des résultats est accrue et sachant que, pour détecter le véhicule, on réalise une reconstruction 3D, une exploitation parallèle des images dans la plage visible étant réalisée optionnellement.

10. Procédé d'utilisation d'une barrière à véhicules (1) selon la revendication 9, **caractérisé en ce que**, lors de l'enregistrement de l'immatriculation, de la détection de véhicule suivant et du contrôle de vandalisme, on passe automatiquement du mode « clichés dans lumière visible » au mode « clichés dans la plage infrarouge » ou « clichés dans la plage visible et infrarouge » si la luminosité ambiante passe en-dessous d'une valeur seuil.
